# EUROPEAN PATENT APPLICATION

(11) **EP 2 911 099 A1**
(43) Date of publication of application: **26.08.2015**
(21) Application number: 14156369.2
(22) Date of filing: 24.02.2014
(51) Int. Cl.: G06Q 10/06, G05B 23/02

(54) **Method, device and computer program product for mining data of a system or appliance**

(71) Applicant: Siemens Aktiengesellschaft, 80333 München (DE)
(72) Inventor: Kaelbling, Michael, 81739 München (DE)

(57) **Abstract**

In order to mine data of any kind of system or device whether or not it is constructed or designed as a durable or non-durable technical consumer product such that
**(i)** arranging configurations options of consumers, who have the problem of most efficiently dimensioning systems or appliances in order to reduce capital investment, and
(**ii**) decision making of manufactures, who succeed in auditing actual resource requirements of their system or appliance in order to dimension the system or appliance to market demands, are improved it is proposed to create an analytical information system based on mining data, whereby the knowledge of a mass of information gathering activities, operational or functional routines of a system or appliance, especially constructed or designed as a durable or non-durable technical consumer product, being inputted to the information system and collected in log messages is extracted to determine dedicated regularities and concealed coherences and to generate corresponding data before the generated data and/or a report of the mined data can be delivered. One focused element of this analytical information system generating the data is condensing the mass of information and/or computing at least one derived value according to at least one of a programmed condensation respectively derivation functionality and a programmed level of condensation respectively derivation, which can preferably upgraded by updating the condensed information and the computed derived value.

## Description

The invention refers to a method for mining data of a system or appliance, especially constructed or designed as a durable or non-durable technical consumer product, according to the preamble of claim 1, an device for mining data of a system or appliance, especially constructed or designed as a durable or non-durable technical consumer product, according to the preamble of claim 10 and a computer program product for mining data of a system or appliance, especially constructed or designed as a durable or non-durable technical consumer product, according to the preamble of claim 24.

Technical systems or appliances whether or not constructed or designed as durable or non-durable technical consumer products know both sides and their interests:
The customer and the manufacturer.

Customers of systems or appliances constructed or designed as durable technical consumer products, e.g. industrial automation systems, have the problem of most efficiently dimensioning the systems or appliances to reduce capital investment. Prior to commissioning, when design decisions are being made, techniques such as simulation, use of anecdotal evidence and expert opinion are applied. Once a system or appliance is in operation, its behavior can be observed. Existing assembly lines may need to be duplicated at other locations, or components of existing plants may need replacement due to damage or wear and tear. At such times an analysis of the historical behavior of the actual system or appliance can be used to improve the system or appliance configuration.

Manufacturers of systems or appliances constructed or designed as durable technical consumer products, e.g. industrial automation systems or components thereof, e.g. operator panels, have the problem of dimensioning their products to market demands. When dimensioning decisions are made without regard to actual measurements of resource requirements, choices can result in excessive marketability margins in high-end components and may result in near misses in low-end components. Manufacturers who succeed in data-mining of actual resource requirements can improve their decision-making.

Thus from the point of view of the customer and manufacturer it is important to address the aspects of collecting significant data from systems or appliances, delivering it, warehousing it, and processing it to improve the system or device configuration and the decision-making. It is especially important to address these aspects for legacy systems or appliances.

Industrial automation components, e.g. operator panels, often collect logging information on removable storage media, like CF (compact flash) or SD (secure digital) cards. This logging information typically exists, like an airline flight-data recorder, to diagnose system failures after the fact. Soon after an incident the data is recovered and analyzed. For this purpose, only the most recent data are saved, since the volume of data produced rapidly exceeds the size of the storage medium.

Some systems may store condensed historical data in a portion of the removable media, e.g. by reserving storage space that is then not available for the buffers of trace data used to diagnose machine state leading up to an incident. The decisions on what data to condense and what volume of data to save must be made before commissioning and are therefore inflexible and expensive to change over time.

It is an object of the invention to mine data of any kind of system or appliance whether or not it is constructed or designed as a durable or non-durable technical consumer product such that
(**i**) arranging configuration options of consumers, who have the problem of most efficiently dimensioning systems or appliances in order to reduce capital investment, and
(**ii**) decision making of manufacturers, who succeed in auditing actual resource requirements of their system or appliance in order to dimension the system or appliance to market demands,
   are improved.

This object is solved based on a method defined in the preamble of claim 1 by the features in the characterizing part of claim 1.

The object is further solved based on a device defined in the preamble of claim 10 by the features in the characterizing part of claim 10.

The object is moreover solved based on a computer program product defined in the preamble of claim 24 by the features in the characterizing part of claim 24.

The main idea of the invention is to create an analytical information system based on mining data, whereby the knowledge of a mass of information gathering activities, operational or functional routines of a system or appliance, especially constructed or designed as a durable or non-durable technical consumer product, being inputted to the information system and collected in log messages is extracted to determine dedicated regularities and concealed coherences and to generate corresponding data before the generated data and/or a report of the mined data can be delivered.

One focused element of this analytical information system generating the data is condensing the mass of information and/or computing at least one derived value according to at least one of a programmed condensation respectively derivation functionality and a programmed level of condensation respectively derivation, which can be preferably upgraded by updating the condensed information and the computed derived value.

Of a sui generis design the subject matter of the invention is preferably either a method, a device as an integrated hardware module or a computer program product running on a non-legacy system or appliance, a method running on an independent hardware component connected, especially as a retrofittable and/or removable component, with a legacy system or appliance or a separate independent device connected, especially as a retrofittable and/or removable device, with a legacy system or appliance.

According to a favorable further development of the invention the dependent claims 2, 11 and 21 teach that the condensed information according to the at least one of the programmed condensation functionality and the programmed level of condensation include preferably at least one of classification classes, feature classes and pattern classes. Saying this, the condensation can be extended by any other condensation elements determining dedicated regularities and concealed coherences of the analyzed mass of information gathering activities, operational or functional routines of the system or appliance respectively the log messages.

According to another beneficial improvement of the invention the dependent claims 3, 12 and 22 teach that the computed derived value according to the at least one of the programmed derivation functionality and the programmed level of derivation include at least one of mean values, MIN-values, MAX-values, variance values, and standard deviation values. Once again also the derivation can be extended by any other derivation element determining dedicated regularities and concealed coherences of the analyzed the mass of information gathering activities, operational or functional routines of the system or appliance respectively the log messages. According to an advantageous further development of the invention the dependent claims 21, 22 and 23 teach that the device is constructed or designed as an independent, retrofitable, and/or removable hardware component, which is preferably inserted at the log-storage interface via suitable components located therein and/or that the device is in series with, parallel to, ganged with or a replacement for an external data storage media.

Furthermore, advantageously and in general the subject matter of the invention acts like a network-sniffer or a spy in that it is apparent to neither the sender (the system or appliance; e.g. the industrial automation system) nor the receiver (the external data storage media), and it requires no changes to the hardware or software of the running system or appliance. This is an advantage to all concerned, since a change involves risk of introducing errors in running processes. Furthermore, changes visible to system components may legally require dilated and costly re-certification of safety-critical systems.Thus acceptance is increased.

The subject matter of the invention is preferably programmable for standalone operation without necessitating transmission of data offsite. Thus control of the data can remain with the owner. Programming of the condensation functionality and/or the level of condensation on one side and the programming of the derivation functionality and/or the level of derivation on the other allow each extended periods of unattended operation. This addresses the same problem of crash logs which can quickly fill available media. The programming of the subject matter of the invention is especially completely isolated from source-data (the log messages respectively the mass of information). The collection, derivation and/or condensation code can be changed independent of the observed system or appliance. The program can include randomized-response data and anonymization functions. The patterns of log messages to match and the periods to condense can be programmed to collect the data most relevant to the decisions to be supported.

When the functionality is no longer needed, the subject matter of the invention, especially the appliance according to the claims 19, 21, 22 and/or 23, can be preferably removed from the system or appliance and can be installed elsewhere. The possibly condensed/derived/collected data is available for upload into the data-mining analysis engine where further refinement can be performed in addition to warehousing and dataset expansion. Thus increasing the experimental basis for new techniques and empirical methods with real-world data (such data collections are valuable in their own right).

In the end in the creation of a programmable subject matter of the invention, especially regarding the appliance being preferably removable and/or retrofittable, for using a log interface to gather and condense/derive behavioral data from existing and future systems or appliances such as an industrial automation devices preferably at customer sites (even potential customers using competitor systems) by tapping customer (owned), real-world, real-time message streams. The programmability of the subject matter of the invention provides especially the flexibility need to increase relevance and reduce costs.

Other expedient improvements of the invention are stated in the other dependent claims.

Moreover advantageous further developments of the invention arise out of the following description of a preferred embodiment of the invention according to the figures 1 to 4. They show:
FIGURE 1 a layout of an operator panel ("appliance" according to the invention) of an industrial automation system ("system" according to the invention) being well known from the state-of-the-art
FIGURE 2 a layout of a hardware component ("device" according the invention) connected to the operator panel of the industrial automation system as shown in FIGURE 1
FIGURE 3 a sequence-chart showing the single steps of a method or a computer program product for mining data of the operator panel of the industrial automation system and the courses of action concerning data-mining within the hardware component as shown in FIGURE 2
FIGURE 4 a simplified sequence-chart showing the single steps for data-mining of a legacy industrial automation system or appliance using an independent removable hardware component ("device" according the invention).

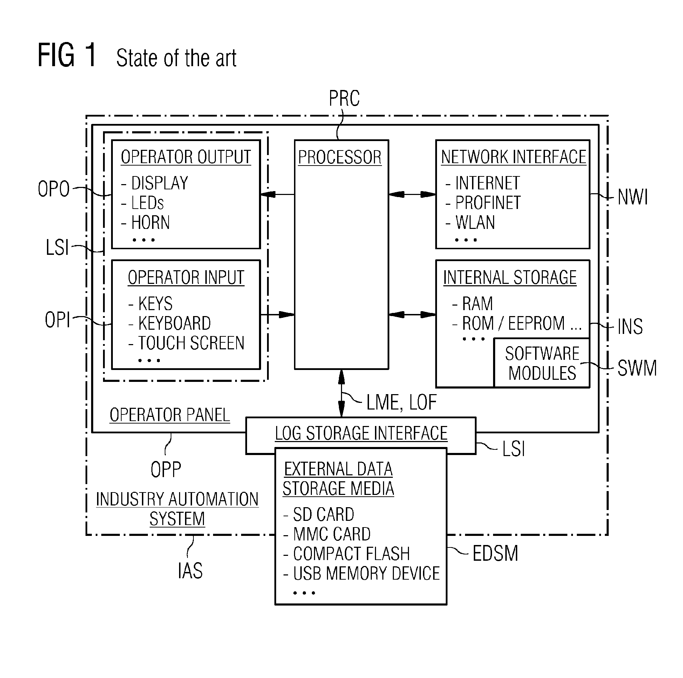

FIGURE 1 shows a layout of an operator panel OPP of an industrial automation system IAS being well known from the state-of-the-art. The operator panel OPP named within the scope of the application as "appliance" and the industrial automation system IAS named within the scope of the application as "system" form a durable technical consumer product, whereby the words "appliance" and "system" are substitutions for any kind of technical system or appliance whether or not it is constructed or designed as a durable or non-durable technical consumer product. So the appliance could also be for example a telecommunication appliance, a domestic appliance apparatus, a medical appliance etc. and the system could also be for example an energy supply system, a medical supply system etc.

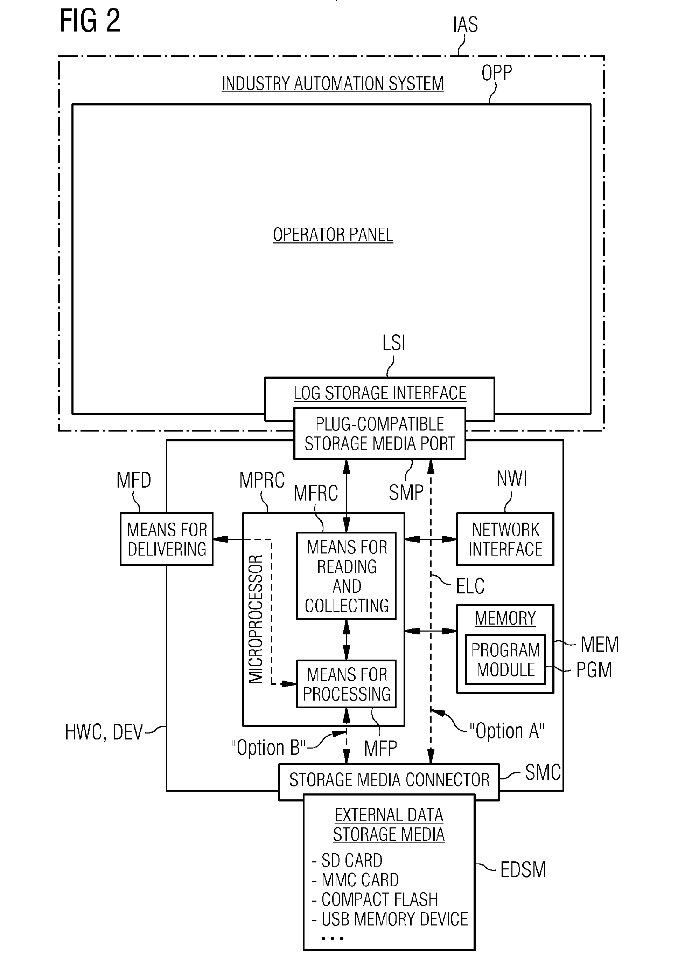

The operator panel OPP of the industrial automation system IAS in FIGURE 2 comprises or includes as a central unit, which controls all the functional and operational routines of the operator panel OPP and/or the industrial automation system IAS, a processor PRC. In other words the processor PRC monitors all the activities of the appliance OPP and/or the system IAS. For this monitoring the processor PRC uses software modules SWM, which are stored in an internal storage INS, which forms a functional unit with the processor PRC by being connected with it. The internal storage INS could be designed preferably as a "Random Access Memory (RAM)", a "Read Only Memory (ROM)" or an "Electrically Erasable Programmable Read Only Memory (EEPROM)". Due to the used software modules SWM the processor PRC has the ability to evaluate or analyse the activities, operational or functional routines of the system IAS and/or the appliance OPP and thereby to create a mass of information referred to as log messages LME. Besides the creation of the log messages LME the processor PRC writes this log messages LME in at least one log file LOF, which is forwarded to a log storage interface LSI of the operator panel OPP of the industrial automation system IAS. Via the log storage interface LSI the user or operator of the industrial automation system IAS can record the cited log messages LME respectively the at least one log file LOF on an external data storage media EDSM. For this purpose the user or operator has to connect, preferably by inserting, the external data storage media EDSM into a cradle of the log storage interface LSI. The cradle of the log storage interface LSI thereby corresponds to the type of the external data storage media EDSM being inserted into the cradle. The type of the external data storage media EDSM could be for example an SD card, a MMC card, a compact flash or a USB memory device. Moreover other types of cards and/or devices are also conceivable.

The operator panel OPP of the industry automation system IAS comprises further a user interface USI and network interface NWI, which are connected each again with the processor PRC in order to form a functional unit with it. The user interface USI contains an operator output OPO including for example a display, at least one LED and/or a horn and an operator input OPI including for example a touch screen, a keyboard and/or at least one key. Via the cited user interface USI the user or operator has the ability to communicate via the processor PRC with further associated units of the operator panel OPP of the system IAS. To take a single example: It is the network interface NWI via which the operator panel OPP respectively the industrial automation system IAS can preferably be linked in both communication directions to the Internet, a Profinet and/or a "Wireless Local Area Network (WLAN)". Saying this, other network connections and/or other user elements of the user interface USI are surmisable in general.

FIGURE 2 shows a layout of a hardware component HWC connected to the operator panel OPP of the industrial automation system IAS as shown in FIGURE 1. According to the embodiment of the invention shown in FIGURE 2 the industrial automation system IAS as described with respect to FIGURE 1 is a legacy system constructed or designed as a durable technical consumer product. Thus the hardware component HWC as shown in FIGURE 2 is not part of the industrial automation system IAS respectively the operation panel OPP. Instead of that it is designed as a separate independent hardware component HWC, which is connected with the legacy industrial automation system IAS and is preferably removable and/or retrofittable. In comparison with the cited "in-part-solution" the "separate independent solution" has the advantage of being retrofittable, which means that no changes at the operator panel OPP respectively the industrial automation system IAS are necessary.

In the case, the industrial automation system with the operator panel is a non-legacy system or appliance, it normally makes no sense to design the hardware component as a separate independent, preferably removable and/or retrofittable, component, which can be connected with the operator panel OPP of the industrial automation system, because it is more sensible due to the non-legacy system to design the hardware component as an in-part-component, the component is integrated in the operator panel of the industrial automation system. In this case it is advantageous to design the hardware component as a computer program product realized in the operator panel OPP thereby using the processor PRC as described in FIGURE 1. Nevertheless it is of course also possible in the case of a non-legacy system or appliance to design the hardware component as a separate independent, again preferably removable and/or retrofittable, component, which can be connected with the operator panel of the non-legacy system.

The hardware component HWC as shown in FIGURE 2 is within the scope of the application a "device" according to a preferred embodiment of the invention. In order to connect the hardware component HWC respectively the device DEV with the operator panel OPP of the industrial automation system IAS the hardware component HWC comprises a plug-compatible storage media port SMT, which can preferably plugged in the log storage interface LSI of the operator panel OPP. Doing so the log messages LME respectively the at least one log file LOF according to FIGURE 1 is transferred via the storage media port SMP of the hardware component HWC to a micro-processor MPRC of the device DEV. Although the micro-processor MPRC controls - as the processor PRC of the operator panel OPP respectively the industrial automation system IAS - again all activities, operational or functional routines of the hardware component HWC including the storage media port SMP, the cited processors are different in respect of the invention.

So the micro-processor MPRC comprises means for reading and collecting MFRC and means for processing MFP, which are connected to each other and therefore form a functional unit, whereby the means for reading and collecting MFRC are connected with the storage media port SMP. When the hardware component HWC respectively the device DEV is connected with the operator panel OPP the means for reading and collecting MFRC of the micro-processor MPRC receiving the messages from the storage media port SMP read and collect all the log messages LME. The reading and collecting of the log messages LME takes place without influencing the handling of the log messages provided at least for log filing according to the description of FIGURE 1. This means firstly that the hardware component HWC respectively the device DEV must comprise also an interface similar to the log storage interface LSI of the operation panel OPP via which the external data storage media EDSM representing the different type of memories and/or devices can be connected with the hardware component HWC. For this purpose the device DEV comprises a storage media connector SMC.

When now the log messages LME should be transferred without influencing the described log filing process of FIGURE 1, from the log storage interface LSI via the storage media port SMP to the external data storage media EDSM hardware this means secondly that the hardware component HWC must offer technical options for realizing it.

According to a first option, referred to as "Option A" according to FIGURE 2, the reading and collecting means MFRC and the processing means MFP of the micro-processor MPRC are by-passed by a logical/physical connection LPC, which leads from the storage media port SMP to the storage media connector SMC. Via this logical/physical connection LPC the log messages LME respectively the at least one log file LOF are transmitted, so that they can be recorded as described with respect to FIGURE 1 on the external data storage media EDSM.

According to a second option, referred to as "Option B" according to FIGURE 2, the processing means MFP are copying the at least one log file LOF including the log messages LME and forward them via the storage media connector SMC, which is connected according to the "Option B" to the processing means MFP, to the external data storage media EDSM.

The reading and collecting means MFRC transfer the read and collected log messages LME to the processing means MFP being connected with the reading and collecting means MFP. Thus the processing means MFP of the micro-processor MPRC process the collected and transferred log messages LME to generate data for the purpose of data-mining by at least one of condensing information and computing at least one derived value and preferably in addition by updating the condensed information and the computed derived value. This processing is effected by program modules PGM according to at least one of a programmed condensation respectively derivation functionality and a programmed level of condensation respectively derivation. The program modules PGM are stored on a memory MEM connected with the processing means MFP thereby forming a functional unit with these means.

While the condensed information according to the at least one of the programmed condensation functionality and the programmed level of condensation include preferably at least one of classification classes, feature classes and pattern classes, the computed derived value according to the at least one of the programmed derivation functionality and the programmed level of derivation include for an example at least one of mean values, MIN-values, MAX-values, variance values and standard deviation values.

When the generation of data is finished in the manner as described above, it makes sense in terms of the object of the invention identified above to have access to these data. This can happen immediately or on demand. With respect to the latter it is convenient to buffer the generated data before delivering or outputting it. The deliverance respectively the output occurred in both cases via delivering means MFD connected to the processing means MFP of the micro-processor MPRC.

Instead of delivering or outputting the generated data for auditing issues it is also possible that the processing means MFP create a report of the data for this purpose. Auditing issues imply typically a reprogramming, configuration and/or analysis recovery.

Finally the hardware component HWC respectively the device DEV comprise as the operator panel of the industry automation system in FIGURE 1 a network interface NWI, which is connected with the micro-processor MPRC in order to form a functional unit with it. It's again the network interface NWI via which the hardware component HWC respectively the device DEV can preferably be linked in both communication directions to the Internet, a Profinet and/or a "Wireless Local Area Network (WLAN)". Saying this, other network connections are surmisable in general.

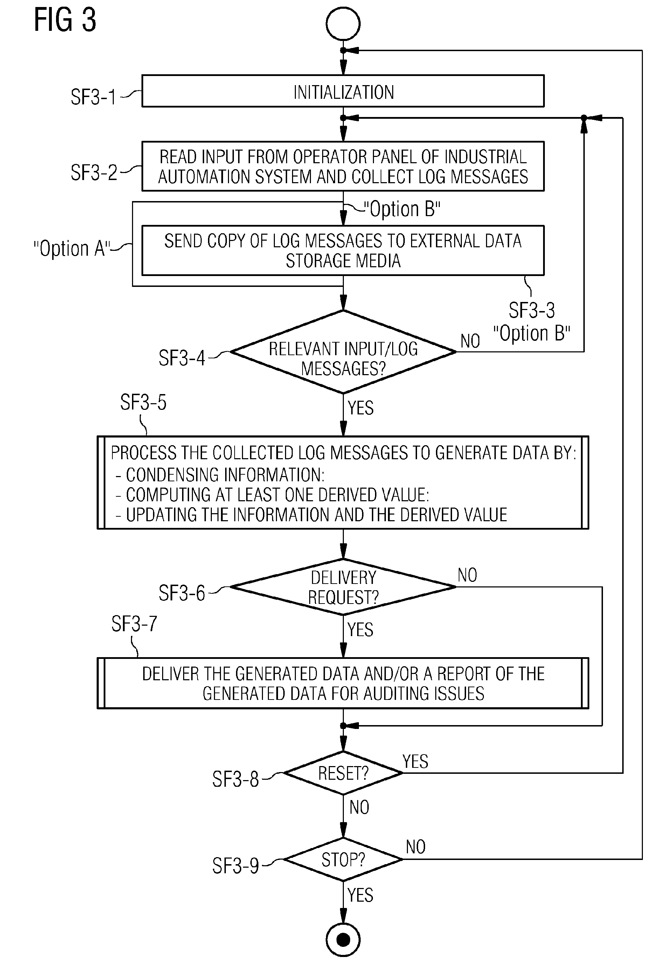

FIGURE 3 shows a sequence-chart showing the single steps of a method or a computer program product for mining data of the operator panel of the industrial automation system and the courses of action concerning data-mining within the hardware component respectively device as shown in FIGURE 2. The steps are carried out by the micro-processor respectively the processing means in connection with the reading and collecting means in FIGURE 2.

In a first step SF3-1 referred to as "Initialization" the method, the computer program product and the hardware component respectively the device are prepared for use. Next, in a second step SF3-2, the input (the log messages in the at least one log file) from the operator panel/industrial automation system respectively the log storage interface is read and the log messages are collected. Subsequent to this step either according to the "Option B" of FIGURE 2 in a third step SF3-3 a copy of the log messages respectively the at least one log file to the external data storage media is send and then in a fourth step SF3-4 it is checked whether the read input/log messages is/are relevant or not or according to the "Option A" of FIGURE 2 it is checked at once and directly in the fourth step SF3-4 whether the read input/log messages is/are relevant or not.

If the answer in the fourth step SF3-4 is "NO", it is jumped back within the sequence chart to the second step SF3-2. If the answer is "YES", it is proceeded with a fifth step SF3-5. According to this step the collected log messages are processed to generate data for the purpose of data-mining by at least one of condensing information and computing at least one derived value, as well as especially updating the condensed information and the computed derived value, according to at least one of a programmed condensation respectively derivation functionality and a programmed level of condensation respectively derivation. The condensed information according to the at least one the programmed condensation functionality and the programmed level of condensation include preferably at least one of classification classes, feature classes and pattern classes. Moreover the computed derived value according to the at least one of the programmed derivation functionality and the programmed level of derivation include at least one of mean values, MIN-values, MAX-values, variance values and standard deviation values.

Succeeding the fifth step SF3-5 in a sixth step SF3-6 it is checked whether a delivery of the generated data and/or a report of the generated data for auditing issues is requested or not.

If the answer is "YES", it is proceeded with a seventh step SF3-7. According to this step the generated data and/or the report of the generated data for auditing issues is delivered as described with reference to FIGURE 2. After the generated data and/or the report of the generated data for auditing issues have been delivered, it is then checked in an eighth step SF3-8 whether the initialized data-mining process from the second step SF3-2 to the seventh step SF3-7 is cycled once more after an reset or not. If the answer in the eighth step SF3-8 is "YES", it is jumped back accordingly within the sequence chart to the second step SF3-2. However, if the answer in the eighth step SF3-8 is "NO", the chart is continued with a ninth step SF3-9.

If the answer in the sixth step SF3-6 is "NO", it is jumped forward within the sequence chart to the eighth step SF3-8 checking whether the initialized data-mining process from the second step SF3-2 to the seventh step SF3-7 is cycled once more after an reset or not.

In the ninth step SF3-9 it is checked finally whether the complete data-mining process from the second step SF3-1 to the eighth step SF3-8 is cycled once again or not. If the answer in the ninth step SF3-9 is "NO", it is jumped back accordingly within the sequence chart to the first step SF3-1. However, if the answer in the ninth step SF3-9 is "YES", the data-mining process is terminated.

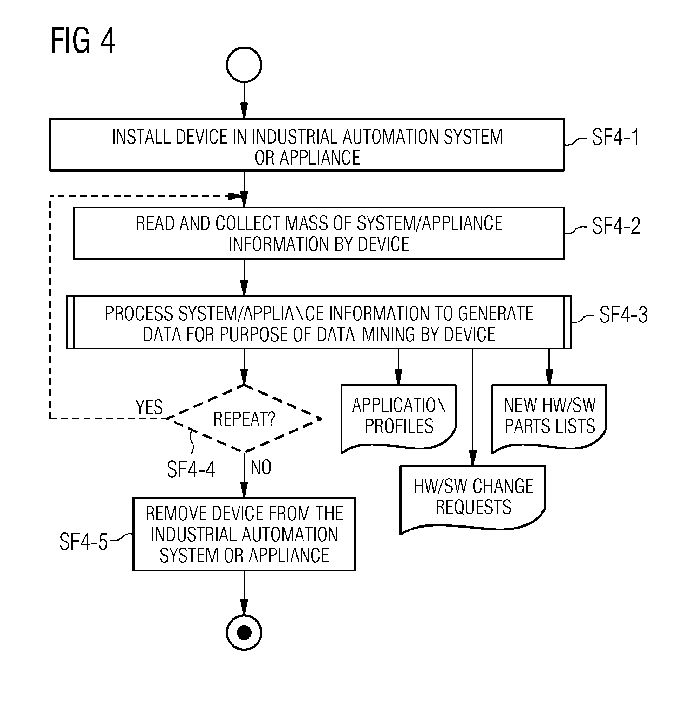

FIGURE 4 shows a simplified sequence-chart showing the single steps for data-mining of a legacy industrial automation system or appliance using an independent removable hardware component or a device. The steps are carried out by person operating the device and the device itself.

In a first step SF4-1 a device or hardware component is installed in an industrial automation system or appliance. Then in a second step SF4-2 a mass of system/appliance information is read and collected by the device. Next in a third step SF4-3 the device processes system/appliance information to generate data for the purpose of data-mining. This generated data is used e.g. for creating application profiles, new "Hardware/Software (HW/SW)" parts lists and "Hardware/Software (HW/SW)" change requests. Afterwards in a fourth step SF4-4 being preferably optional it is checked whether the sequence so far is repeated.

If the answer in the fourth step SF4-6 is "YES", it is jumped back accordingly within the sequence chart to the second step SF4-2. If the answer is "NO", it is proceeded with a fifth step SF4-5. According to this step the device is removed from the industrial automation system or appliance, which terminates the sequence. Saying this, it is also possible to repeat the whole sequence at any time.

## Claims

1. Method for mining data of a system (IAS) or appliance (OPP), especially constructed or designed as a durable or non-durable technical consumer product, whereby log messages (LME) gathering activities, operational or functional routines of the system (IAS) or appliance (OPP) are written in at least one log file (LOF), which is recorded via a log storage interface (LSI) of the system (IAS) or device (OPP) on an external data storage media (EDSM), including the steps of:
a) Reading and collecting the log messages (LME) without influencing the handling of the log messages provided at least for log filing,
b) Processing the collected log messages (LME) to generate the said data by at least one of condensing information and computing at least one derived value, as well as especially updating the condensed information and the computed derived value, according to at least one of a programmed condensation respectively derivation functionality and a programmed level of condensation respectively derivation and
c) Delivering, especially on demand, at least one of the generated data and a report of the generated data for auditing issues.

2. Method according to claim 1, **characterized in that** the condensed information according to the at least one of the programmed condensation functionality and the programmed level of condensation include at least one of classification classes, feature classes and pattern classes.

3. Method according to claim 1 or 2, **characterized in that** the computed derived value according to the at least one of the programmed derivation functionality and the programmed level of derivation include at least one of mean values, MIN-values, MAX-values, variance values and standard deviation values.

4. Method according to one of the claims 1 to 3, **characterized by** copying ("Option B") the at least one log file (LOF) including the log messages (LME) and forward them via the log storage interface (LSI) to the external data storage media (EDSM).

5. Method according to one of the claims 1 to 3, **characterized by** by-passing ("Option A") the processing of the collected messages for forwarding the at least one log file (LOF) including the log messages (LME) via the log storage interface (LSI) to the external data storage media (EDSM).

6. Method according to one of the claims 1 to 5, **characterized by** warehousing at least one of the generated data and the report of the generated data.

7. Method according to one of the claims 1 to 6, **characterized by** isolating the programming from source-data, especially the log messages (LME), and changing a programming code at least one of the condensation process and the derivation process independently from the observed system (IAS) or device (OPP).

8. Method according to one of the claims 1 to 7, **characterized in that** the system (IAS) or appliance (OPP) as a durable technical consumer product is an operator panel of an industrial automation system.

9. Method according to one of the claims 1 to 8, **characterized in that** the system (IAS) or appliance (OPP) is a legacy system or appliance.

10. Device (HWC, DEV) for mining data of a system (IAS) or appliance (OPP), especially constructed or designed as a durable or non-durable technical consumer product, being connectable to a log storage interface (LSI) of the system (IAS) or appliance (OPP) via which at least one log file (LOF) with written log messages (LME) gathering activities, operational or functional routines of the system (IAS) or appliance (OPP) are recorded on an external data storage media (EDSN), including:
a) Means (MFRC) for reading and collecting reading and collecting the log messages without influencing the handling of the log messages (LME) provided at least for log filing,
b) Means (MFP) for processing connected with the reading and collecting means (MFP) thereby forming a functional unit, especially a processor (MPRC), processing the collected log messages (LME) to generate the said data by at least one of condensing information and computing at least one derived value, as well as especially updating the condensed information and the computed derived value, according to at least one of a programmed condensation respectively derivation functionality and a programmed level of condensation respectively derivation and stored as program modules (PGM) on a memory (MEM), which forms a functional unit with the processing means (MFP), and
c) Means (MFD) for delivering delivering, especially on demand, at least one of the generated data and a report of the generated data for auditing issues, which form a functional unit with the processing means (MFP).

11. Device (HWC, DEV) according to claim 10, **characterized in that** the program module (PGM) stored in the memory (MEM) is designed such that the condensed information according to the at least one of the programmed condensation functionality and the programmed level of condensation include at least one of classification classes, feature classes and pattern classes.

12. Device (HWC, DEV) according to claim 10 or 11, **characterized in that** the program module (PGM) stored in the memory (MEM) is designed such that the computed derived value according to the at least one of the programmed derivation functionality and the programmed level of derivation include at least one of mean values, MIN-values, MAX-values, variance values and standard deviation values.

13. Device (HWC, DEV) according to one of the claims 10 to 12, **characterized by** a plug-compatible storage media port (SMP) the connection to the log storage interface (LSI) of the system (IAS) or appliance (OPP) is realized.

14. Device (HWC, DEV) according to one of the claims 10 to 13, **characterized in that** the processing means (MFP) are copying the at least one log file (LOF) including the log messages (LME) and forward them via a storage media connector (SMC), which is connected ("Option B") to the processing means (MFP), to the external data storage media (EDSM).

15. Device (HWC, DEV) according to one of the claims 10 to 13, **characterized by** a logical/physical connection (LPC; "Option A") by-passing the reading and collecting means (MFRC) and the processing means (MFP), which is transporting the at least one log file (LOF) including the log messages (LME) from the log storage interface (LSI) to the external data storage media (EDSM).

16. Device (HWC, DEV) according to one of the claims 10 to 15, **characterized by** the memory (MEM) warehousing at least one of the generated data and the report of the generated data.

17. Device (HWC, DEV) according to one of the claims 10 to 16, **characterized in that** the program module (PGM) stored in the memory (MEM) is designed such that the programming is isolated from source-data, especially the log messages (LME), and a programming code of the at least one of the condensation process and the derivation process is changed independently from the observed system (IAS) or appliance (OPP).

18. Device (HWC, DEV) according to one of the claims 10 to 17, **characterized in that** the system (IAS) or appliance (OPP) as a durable technical consumer product is an operator panel of an industrial automation system.

19. Device (HWC, DEV) according to one of the claims 10 to 18, **characterized in that** the system (IAS) or appliance (OPP) is a legacy system or device.

20. Device (HWC, DEV) according to one of the claims 10 to 19, **characterized in that** the device is integrated in the system (IAS) or appliance (OPP) and therefore part of the system (IAS) or appliance (OPP).

21. Device (HWC, DEV) according to claim 19, **characterized by** a system- or appliance-independent hardware component, which is at least one of retrofittable and removable.

22. Device (HWC, DEV) according to claim 19 or 21, **characterized in that** it is inserted at the log storage interface (LSI) via suitable components located therein.

23. Device (HWC, DEV) according to one of the claims 19, 21 or 22, **characterized in that** it is in series with, parallel to, ganged with, or a replacement for the external data storage media (EDSM).

24. Computer program product for mining data of a system (IAS) or appliance (OPP), especially constructed or designed as a technical durable or non-durable consumer product, which contains a program code stored on a computer-readable medium (MEM) and which, when executed on a processor (PRC, MPRC) of at least one of the system (IAS) or appliance (OPP) and a device (HWC, DEV) for mining data of the system (IAS) or appliance (OPP), whereby log messages (LME) gathering activities, operational or functional routines of the system (IAS) or appliance (OPP) are written in at least one log file (LOF), which is recorded via a log storage interface (LSI) of the system (IAS) or appliance (OPP) on an external data storage media (EDSM), carries out the following steps:
a) Reading and collecting the log messages (LME) without influencing the handling of the log messages (LME) provided at least for log filing,
b) Processing the collected log messages (LME) to generate the said data by at least one of condensing information and computing at least one derived value, as well as especially updating the condensed information and the computed derived value, according to at least one of a programmed condensation respectively derivation functionality and a programmed level of condensation respectively derivation and
c) Delivering, especially on demand, at least one of the generated data and a report of the generated data for auditing issues.

25. Computer program product according to claim 24, **characterized in that** the condensed information according to the at least one of the programmed condensation functionality and the programmed level of condensation include at least one of classification classes, feature classes and pattern classes.

26. Computer program product according to claim 24 or 25, **characterized in that** the computed derived value according to the at least of the programmed derivation functionality and the programmed level of derivation include at least one of mean values, MIN-values, MAX-values, variance values and standard deviation values.

27. Computer program product according to one of the claims 24 to 26 carries out the step:
Storing at least one of the generated data and the report of the generated data.

28. Computer program product according to one of the claims 24 to 27 carries out the step:
Isolating the programming from the source of the data, especially the log messages (LME), and changing a programming code of at least one of the condensation process and the derivation process independently from the observed system (IAS) or appliance (OPP).
